# EUROPEAN PATENT SPECIFICATION

(11) **EP 1 323 932 B1**
(45) Date of publication and mention of the grant of the patent: **27.04.2005**
(21) Application number: 00966173.7
(22) Date of filing: 03.10.2000
(51) Int. Cl.: F16B 5/06, F16B 21/07, B60R 13/02

(54) **DEVICE FOR FIXING TOGETHER A PANEL AND A SUPPORT PLATE**
VORRICHTUNG ZUR BEFESTIGUNG EINER PLATTE UND EINER STÜTZSCHEIBE ANEINANDER
DISPOSITIF DESTINE A L'ASSEMBLAGE D'UN PANNEAU SUR UNE PLAQUE DE SUPPORT

(43) Date of publication of application: 02.07.2003
(73) Proprietor: I.T.W. Espana, S.A., 08520 Les Franqueses Del Valles (Barcelona) (ES)
(72) Inventor: PARES ISANTA, Albert Ctra. de Ribas, E-08520 Barcelona (ES)
(74) Representative: Carpintero Lopez, Francisco
(86) International application number: PCT/ES2000/000367
(87) International publication number: WO 2002/029260

(56) References cited:
- EP-A- 0 524 750
- FR-A- 2 214 348
- GB-A- 2 057 554
- GB-A- 2 317 199
- US-A- 4 804 303
- US-A- 5 173 026
- US-A- 5 507 610
- US-A- 5 975 820
- US-A- 6 039 523

## Description

### OBJECT OF THE INVENTION

The present invention relates to a device for fixing together a panel and a support plate, and more specifically to a clip or clamp used to fix an internal or external lining of the body of a vehicle, wherein the panel and the plate or body are set parallel or nearly parallel to each other, and practically against each other or with a small separation.

The object of the invention is to provide a fixing clip or clamp that, in addition to acting as such and insuring the tightness of the union, allows to adjust the separation between the panel and the plate acting as support, as well as to disassemble them without difficulty, thereby recovering the device or clip for a possible re-utilization.

### BACKGROUND OF THE INVENTION

PCT ES 99/00324 describes a fixing clip for plates, preferably and especially applicable for fixing an inner lining panel for a vehicle body, clip which comprises a single piece of plastic complemented by a plastic flange that is moulded from a casting on the single piece, obtained previously by injection moulding.

The single piece has a header for coupling it to the panel and a peripheral groove on said header for inserting the flange, the latter determining the corresponding sealing element. Additionally, the single piece also comprises a locking core that can contract elastically and is meant to couple in the orifice of the support plate, corresponding naturally to the metal body, in the case of a vehicle, with said locking core having side arms that provide it with the required elasticity, in a trunco-conical arrangement, to facilitate the insertion of the said core in the fixing orifice of the support plate of the vehicle body.

The clamp described does not allow adjusting the separation between the panel and the support plate, which on occasion is necessary.

A fastener for releasably securing first and second panels together is disclosed in patent US-5.507.610 , which comprises a pin for being secured in an opening of a first panel, and a grommet for being secured in an opening of the second panel and for releasable receiving a shank of the pin to thereby releasably secure first and second panels together. When the panel need to be separated, the pin and the grommet are not extracted together, instead the pin is detached from the grommet in such a way that the pin remains attached to the first panel 11 while the grommet remains seated in the opening of the second panel.

Other devices for fixing panels are known from documents US-6.039.523, US-5.173.026 and FR-2.214.348.

### DESCRIPTION OF THE INVENTION

The device of the invention consists of a clip or clamp for fixing a panel and a support plate, with the special characteristic that its structure allows adjusting the separation between the panel and the support plate, as well as a simple disassembly, which allows a possible re-utilization.

To provide these functions and others that will be described in the present description, the device of the invention is characterised firstly in that it comprises two parts joined to each other by pressure, one having the function a male part and the other the function of a female part especially as the invention relates to a device of the type disclosed in US-A-5507610 and having the features recited in claim 1.

The male part comprises an elongated body in the form of a shaft, on one of whose ends is provided the corresponding header for fixing it to the panel, while the rest of said part determines a segment with peripheral sawtooth projections which will allow adjusting the separation between the panel and the support plate, as the female part is joined to the male part so that they move relative to each other, and it is the female part that passes through the orifice of the support plate and is locked in it.

Likewise, further projections or tabs, as well as flanges, are provided with several functions, some to retain the female part on the male part and thereby prevent the adjustment from taking place before the assembly; others, specifically the tabs, to retain the female and male part on each other to allow the former to be carried when the male part is pulled out during disassembly; others to ensure a proper relative position of the two parts before the assembly is installed, etc.

A further characteristic of the said male part is its conical configuration, in the form of a cap, on the end opposite the header, which configuration determines a self-centring means during the assembly to prevent possible offsets between the orifices, the body support plate and the position of the device or clip in the panel. It also allows moving the female part during disassembly.

As regards the female part it comprises an elastic core or body that is determined by side arms which configure said part, all according to a trunco-conical configuration to allow its insertion in the orifice of the support plate, with the free end of said arms having tabs for locking on the peripheral projections of the male part, in order to allow adjusting the displacement of one part with respect to the other, and therefore the panel with respect to the support plate comprised by the vehicle body when this is the application of the device.

Said female part comprises, as is conventional, a sealing and stop suction cup in its assembly on the corresponding orifice of the support plate or body itself, including a conical configuration of its upper opening to facilitate the entry of the corresponding flanges of the male part.

The device can be complemented with a soft plastic washer mounted around the perimeter of the suction cup to improve the seal provided, which washer would be incorporated by moulding or injection from a casting.

As regards the aforementioned female part, it should also be remarked that the tabs provided on the end opposite the locking end of said part, which constitute the means for adjusting the displacement of said female part with respect to the male part, are offset in height in order to halve the distance between each pair of peripheral sawtooth projections of the male part. Additionally, the female part is provided near the end where said tabs are provided with grooves that allow the tabs to bend in one sense and in addition to achieve the locking onto the male part.

### DESCRIPTION OF THE DRAWINGS

In order to complement the description and to aid a better understanding of the characteristics of the invention, according to a preferred example of embodiment, a set of drawings are accompanied as an integral part of the description, where for purposes of illustration and in a non-limiting manner the following is represented:

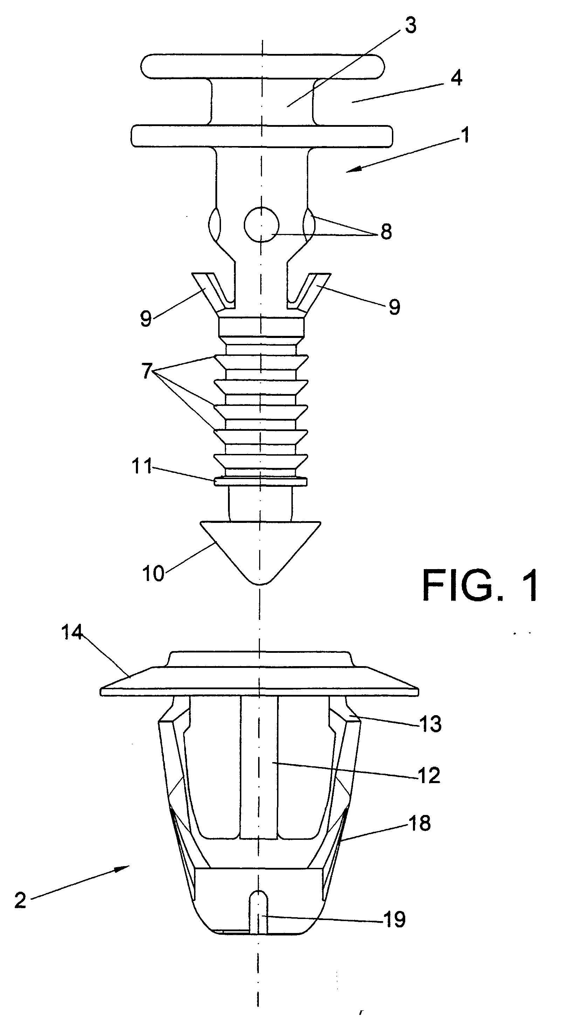

Figure 1 shows a side elevation exploded view of the two parts that constitute the device of the invention.
Figure 2 shows a view of the union of the two parts shown in the previous figure, according to a longitudinal section in a position of supplying the device, with the washer incorporated on the peripheral edge of the suction cup of the female part.
Figure 3 shows the initial assembly stage of the device between a panel and a support plate, which may correspond to the body of a vehicle.
Figure 4 shows the same assembly of the previous figure, in a stage of approximation of the panel and the support plate, which respect of the previous figure shows the manner of adjusting the separation between said panel and support plate.

### PREFERRED EMBODIMENT OF THE INVENTION

In view of said figures, it can be seen that the device disclosed comprises two parts (1) and (2) that are joined to each other by pressure, with both parts obtained by injection of a relatively hard plastic material.

The part (1), hereinafter referred to as the male part, is provided on one of its ends with a header (3), which in turn has a groove (4) for coupling it onto the panel (5), specifically on a turret of said panel (5) to which it must be fixed. After the aforementioned header (3) said male part (1) determines an elongated shaft form with a segment (6) that is provided with a number of peripheral sawtooth projections (7); with the specific characteristic that between the header (3) and the sawtooth segment (7) are provided flanges (8) and tabs (9) that project laterally and diverge in an upward sense, the function of which will be explained below. The end opposite the header (3) has a conical configuration (10) in the form of a cap, while between this conical formation (10) and the other segment (6) there is a straight peripheral projection (11).

As regards part (2), hereinafter referred to as the female part, it is provided with lateral elastic arms (12) having a trunco-conical configuration, with a peripheral lip (13) and a sealing suction cup (14) in correspondence with one of its ends, in which is defined an opening for inserting the shaft of the male part (1); a conical segment (15) is provided at this opening to facilitate the entry or passage of the flanges (8) of the male part (1).

The elastic arms (12) of the female part (2) determine a trunco-conical configuration that allows its insertion in the corresponding orifice of the support plate (16) corresponding to the body of a vehicle, on which the panel (5) is to be fixed.

On the end opposite the sealing suction cup (14) are provided elastic tabs (17) that constitute the means for adjusting the relative displacement between the male part (1) and the female part (2), so that said elastic tabs (17) tend to lock in the peripheral projections (7) that define the toothing of the male part (1); such that said elastic parts (17) are offset in height in order to halve the distance between the pair of projections (7) that define the toothed segment (6) of the male part (1).

The lateral elastic arms (12) of the female part (2) are provided with reinforcement ribs (18), while near the end provided with the tabs (17) said arms have grooves (19) that allow bending said tabs (17).

The device can be complemented with a washer (20) made of a soft plastic material, incorporated by moulding or injecting from a casting on the peripheral edge of the suction cup (14), thereby increasing the tightness provided by the latter.

According to the structure described above, the operation of the device is as follows:

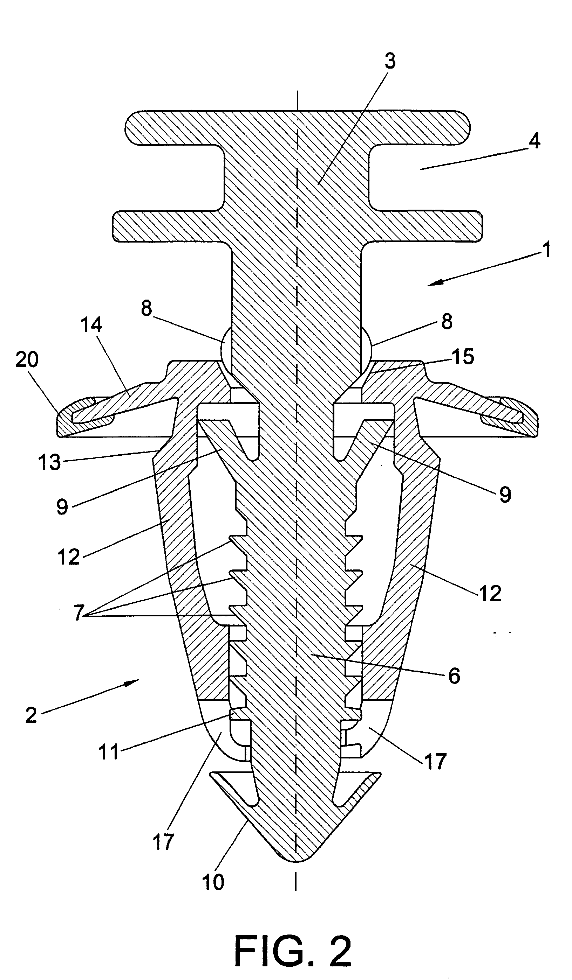

The device is supplied as shown in figure 2, that is, with the female part (2) placed in the lowermost area of the male part (1), with the tabs (17) closed in the resting position.

In said situation, the device is mounted through the groove (4) of the male part (1) on the panel (5), and through the female part (2) on the support plate (16), until the suction cup (14) meets the surface of said plate, so that the female plate (2) is locked in the corresponding orifice of the support plate (16) by the peripheral lip (13) of the said female part (2), which meets the opposing part of the aforementioned support plate (16). To prevent the adjustment from taking place before assembly, the flanges (8) and the circular ring (11) are provided, such that the force required to insert these is greater than that required to insert the lateral arms (12) of the female part (2).

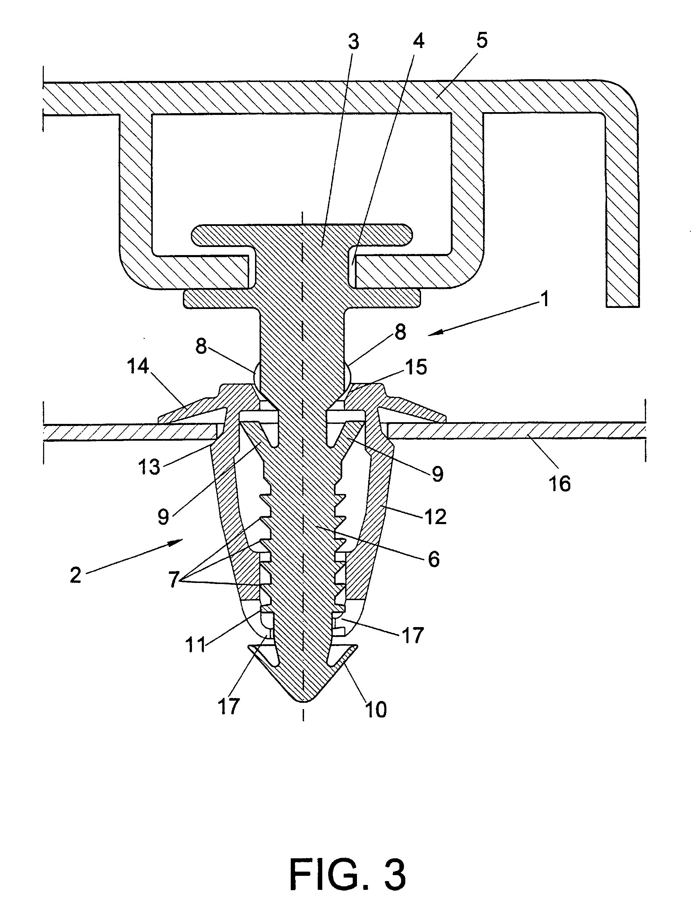

From this situation, shown in figure 3, the panel (5) is pushed against the support plate (16), causing the displacement of the male part (1) with respect to the female part (2), so that the tabs (17) of the latter slide on the projections (7) overcoming the resistance of the flanges (8) and (11) of the former; the two parts can be locked on each other in any position determined by the projections (7) and the tabs (17), allowing to adjust the displacement and therefore the separation between the panel (5) and the support plate (16); that is, it is possible to adjust the distance between the two aforementioned components as desired.

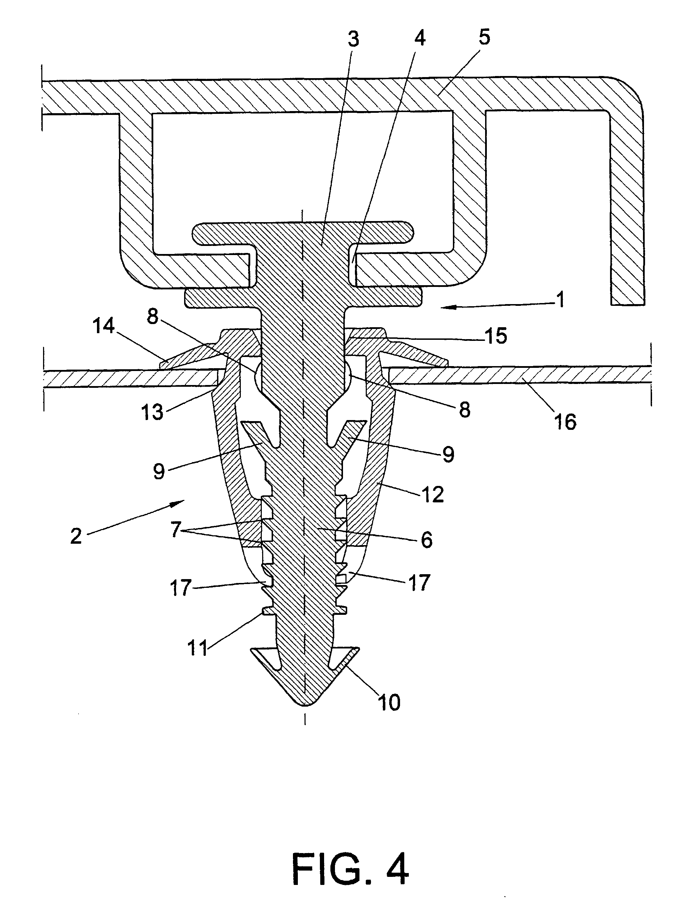

Disassembly can be easily performed, thereby allowing to reuse the device. For this the male part (1) must be pulled in the sense indicated by the arrow of figure 4, so that as it is pulled it carries the female part (2), since the flanges (8) and the oblique tabs (9), the peripheral lip (11) or the projections (7) and the conical configuration (10) of the male part (1) constitute retention means for the female part (2), carrying the latter when the male part (1) is pulled on and extracted. The flanges (8), tabs (9), projections (11) or projections (7) and the conical configuration (10) are spaced along the shaft that constitutes the male part (1) such that when the female part (2) is pulled and its tabs (17) pass one of the aforementioned elements, retention is provided by the following element (flange, tab, peripheral projection, projections and conical configuration).

The peripheral projection (11) is straight and in addition to the aforementioned retaining functions it determines the starting axis for the toothing formed by the sawtooth projections (7).

On its part, the conical form (10) of the end of the male part (1) also constitutes a means of retention of the female part (2) for carrying the latter, if for any reason the tabs (17) of said female part (2) pass beyond the peripheral projection (11) during their displacement, and further prevent the adjustment from occurring before the device is assembled, as if said end conical configuration (10) were not present the female part (2) could be displaced by the toothed segment of the male part (1), which would prevent its motion in the opposite sense unless a great force were exerted, which could lead to damaging or breaking a component.

## Claims

1. Device for fixing together a panel (5) and a support plate (16), preferably meant for fixing an internal or external lining panel to the corresponding body of a vehicle, the device comprising a male part (1) and a female part (2) that are independent and can be coupled to each other by pressure, the male part (1) being provided with a header (3) for assembly to the panel (5), whereas the female part (2) is provided with elastic arms (12) determining a trunco-conical part for assembly on the support plate (16), wherein the male part (1) has an elongated shape in the form of a shaft, and define in an intermediate area a toothed segment (6) provided with peripheral sawtooth projections (7), on which fall the elastic tabs (17) provided for such purpose on the corresponding end of the female part (2), to allow adjusting the relative displacement of the aforementioned parts (1) and (2) and thereby the separation of the panel (5) from the support plate (16), **characterised in that** the male part (1) is provided with retention means (8, 9, 11, 7, 10) for the female part (2) to be carried by the male part (1) as the latter is pulled out during the disassembly of the device, the female part (2) being provided with a sealing suction cup (14) in one of its ends, which proceeds a tight contact with the surface of the support plate (16).

2. Device for fixing together a panel and a support plate, according to claim 1, **characterised in that** the male part (1) is provided between the header (3) and the toothed segment (6) with flanges (8) and oblique tabs (9) that diverge and project outwards, offset in height with respect to said flanges (8), defining the means for carrying the female part (2); such that said male part (1) is further provided on the end opposite the header (3) with a conical formation (10) in the form of a cap, so that between this formation and the toothed segment (6) is provided a straight peripheral projection (11) that determines additional means for carrying the female part (2) in the disassembly of the device or unit.

3. Device for fixing together a panel and a support plate, according to the previous claims, **characterised in that** the female part (2) is provided on the end having the elastic tabs (17) with grooves (18) suitable for providing elasticity to said tabs (17).

4. Device for fixing together a panel and a support plate, according to the previous claims, **characterised in that** the opening of the female part (2) in which inserts the shaft of the male part (1) is provided with a trunco-conical segment (15) that allows the passage of the projections (8) of said male part (1).

5. Device for fixing together a panel and a support plate, according to the previous claims, **characterised in that** the elastic tabs (17) of the female part (2) are offset in height by pairs in order to reduce the separation between the peripheral projections (7) that determine the toothed segment (6) of the male part (1).

6. Device for fixing together a panel and a support plate, according to the previous claims, **characterised in that** the sealing suction cup (14), in the form of a flange or peripheral lip of the female part (2) can be peripherally complemented with a washer (20) of soft plastic that is incorporated by moulding or injecting from a casting, constituting a means for enhancing the tightness of said suction cup (14).

7. Device for fixing together a panel and a support plate, according to the previous claims, **characterised in that** the support plate (16) is located in between the suction cup (14) and a peripheral lip (13) which is defined in one end of the elastic arms (12), the female part (2) thereby being locked in the corresponding orifice of the support plate (16).

## Patentansprüche

1. Vorrichtung zum Befestigen eines Paneels (5) und einer Grundplatte (16), vorzugsweise gedacht, um die innere oder äussere Verkleidung an dem entsprechenden Körper eines Fahrzeugs anzubringen, wobei diese Vorrichtung einen Stiftteil (1) und einen Buchsenteil (2) umfasst, die unabhängig voneinander sind und durch Druck miteinander verbunden werden können, wobei der Stiftteil (1) über ein Kopfteil (3) verfügt, um an das Paneel (5) angebracht zu werden, während der Buchsenteil (2) mit elastischen Armen (12) ausgestattet ist, die einen trichterförmigen Teil zum Anbringen an der Grundplatte (16) ausbilden, und der Stiftteil (1) eine längliche Form in Form eines Schafts hat und im einem mittleren Bereich einen gezahnten Abschnitt (6) bildet, der umfängliche Sägezahnvorsprünge (7) aufweist, auf die die elastischen Klappen (17) fallen, die für diesen Zweck an dem entsprechenden Ende des Buchsenteils (2) angebracht sind, um die relative Verschiebung der vorgenannten Teile (1) und (2) und somit den Abstand zwischen dem Paneel (5) und der Grundplatte (16) regulieren zu können, **dadurch gekennzeichnet, dass** der Stiftteil (1) über Rückhaltevorrichtungen (8, 9, 11, 7, 10) für den Buchsenteil (2) verfügt, die der Stiftteil (1) trägt, während letzterer während des Auseinanderbauens der Vorrichtung herausgenommen wird, wobei der Buchsenteil an einer ihrer Enden (2) über einen dichtenden Saugnapf (14) verfügt, der einen engen Kontakt mit der Oberfläche der Grundplatte (16) bewirkt.

2. Vorrichtung zum Befestigen eines Paneels und einer Grundplatte gemäss Anspruch 1, **dadurch gekennzeichnet, dass** der Stiftteil (1) zwischen dem Kopfstück (3) und dem gezahnten Abschnitt (6) über Flansche (8) und schräge Klappen (9) verfügt, die auseinander laufen und nach aussen vorstehen, versetzt in Höhe hinsichtlich der besagten Flansche (8), die Mittel definierend, um den Buchsenteil (2) aufzunehmen; desgleichen verfügt der besagte Stiftteil (1) weiterhin an dem dem Kopfteil (3) gegenüberliegenden Ende über eine trichterförmige Anordnung (10) in Forma einer Klappe, so dass zwischen dieser Anordnung und dem gezahnten Bereich (6) ein gerader, umfänglicher Vorsprung (11) ausgebildet ist, der zusätzliche Mittel zur Aufnahme des Buchsenteils (2) bei dem Auseinandemehmen der Vorrichtung oder Einheit zur Verfügung stellt.

3. Vorrichtung zum Befestigen eines Paneels und einer Grundplatte gemäss den vorangegangenen Ansprüchen, **dadurch gekennzeichnet, dass** der Buchsenteil (2) an dem Ende, das die elastischen Klappen (17) aufweist, über Rillen (18) verfügt, die geeignet sind, den besagten Klappen (17) Elastizität zu geben.

4. Vorrichtung zum Befestigen eines Paneels und einer Grundplatte gemäss den vorangegangenen Ansprüchen, **dadurch gekennzeichnet, dass** die Öffnung des Buchsenteils (2), in die der Schaft des Stiftteils (1) eingeführt wird, über einen trichterförmigen Abschnitt (15) verfügt, der das Durchführen der Vorsprünge (8) des besagten Stiftteils (1) ermöglichen.

5. Vorrichtung zum Befestigen eines Paneels und einer Grundplatte gemäss den vorangegangenen Ansprüchen, **dadurch gekennzeichnet, dass** die elastischen Klappen (17) des Buchsenteils (2) in Höhe in Paaren versetzt sind, um den Abstand zwischen den umfänglichen Vorsprüngen (7), die den gezahnten Abschnitt (6) des Stiffteils (1) ausmachen.

6. Vorrichtung zum Befestigen eines Paneels und einer Grundplatte gemäss den vorangegangenen Ansprüchen, **dadurch gekennzeichnet, dass** der dichtende Saugnapf (14) in Form eines Flansches oder umfänglichen Lippe des Buchsenteils (2) umfänglich durch einen Dichtungsring (20) aus weichem Plastik vervollständigt werden kann, der durch Formen oder Formspritzen angebracht werden kann und ein Mittel zur Verstärkung der Dichtigkeit des besagten Saugnapfes (14) bildet.

7. Vorrichtung zum Befestigen eines Paneels und einer Grundplatte gemäss den vorangegangenen Ansprüchen, **dadurch gekennzeichnet, dass** sich die Grundplatte (16) zwischen dem Saugnapf (14) und einer umfänglichen Lippe (13) befindet, die an einem Ende der elastischen Arme (12) ausgebildet ist, wodurch der Buchsenteil (2) in der entsprechende Öffnung der Grundplatte (16) eingeschlossen ist.

## Revendications

1. Dispositif pour fixer ensemble un panneau (5) et un plaque de support (16), de préférence conçu pour fixer un panneau de revêtement interne ou externe à la carrosserie correspondante du véhicule, le dispositif comprenant une pièce mâle (1) et une pièce femelle (2) qui sont indépendantes et qui peuvent s'accoupler l'une à l'autre à pression, la pièce mâle (1) étant pourvue d'une bouterolle (3) pour s'assembler au panneau (5), tandis que la pièce femelle (2) est pourvue de bras élastiques (12) déterminant une pièce tronconique pour s'assembler sur la plaque de support (16), dans laquelle la pièce mâle (1) a une forme allongée sous forme d'un arbre, et ils définissent dans une zone intermédiaire un segment denté (6) pourvu de saillies périphériques sous forme de dents de scie (7), sur lesquelles tombent des pattes élastiques (17) prévues à cet effet à l'extrémité correspondante de la pièce femelle (2), pour permettre d'ajuster le déplacement relatif desdits pièces (1) et (2) et par conséquent la séparation du panneau (5) de la plaque de support (16), **caractérisé en ce que** la pièce mâle (1) est pourvue de moyens de retenue (8,9,11,7,10) pour que la pièce mâle (2) soit portée par la pièce mâle (1) lorsque cette dernière est sortie pendant le désassemblage du dispositif, la pièce femelle (2) étant pourvue d'une ventouse d'étanchéité (14) à une de ses extrémités, qui fournit un contact intime avec la surface de la plaque de support (16).

2. Dispositif pour fixer ensemble un panneau et une plaque de support, selon la revendication 1, **caractérisé en ce que** la pièce mâle (1) est prévue entre la bouterolle (3) et le segment denté (6) avec des rebords (8) et des pattes obliques (9) qui divergent et saillissent extérieurement, décalées en hauteur par rapport audit rebords (8), qui définissent les moyens pour porter la pièce femelle (2); de manière que ladite pièce (1 ) soit prévue en outre, à l'extrémité en regard de la bouterolle (3) avec une formation conique (10) sous forme de capsule, de manière qu'entre cette formation et le segment denté (6) soit prévu une saillie droite périphérique (11 ) qui détermine des moyens additionnels pour porter la pièce femelle (2) lors du désassemblage du dispositif ou unité.

3. Dispositif pour fixer ensemble un panneau et une plaque de support selon les revendications antérieures, **caractérisé en ce que** la pièce femelle (2) est prévue à une extrémité qui a les pattes élastiques (17) avec des rainures (18) appropriées pour pourvoir de l'élasticité audites pattes (17).

4. Dispositif pour fixer ensemble un panneau et une plaque de support, selon les revendications antérieures, **caractérisé en ce que** l'ouverture de la pièce femelle (2) dans laquelle est inséré l'arbre de la pièce mâle (1) est pourvue d'un segment tronconique (15) qui permet le passage des saillies (8) de ladite pièce mâle (1).

5. Dispositif pour fixer ensemble un panneau et une plaque de support, selon les revendications antérieures, **caractérisé en ce que** les pattes élastiques (17) de la pièce femelle (2) sont décalées en hauteur par couples afin de réduire la séparation entre les saillies périphériques (7) qui déterminent le segment denté (6) de la pièce mâle (1).

6. Dispositif pour fixer ensemble un panneau et une plaque de support, selon les revendications antérieures, **caractérisé en ce que** la ventouse d'étanchéité (14), sous forme d'un rebord ou lèvre périphérique de la pièce femelle (2) peut être complémentée périphériquement par une rondelle (20) en plastique mou qui est incorporée par moulage ou injection à partir d'une coulée, en constituant un moyen pour améliorer l'étanchéité de la ventouse (14).

7. Dispositif pour fixer ensemble un panneau et une plaque de support, selon les revendications antérieures, **caractérisé en ce que** la plaque de support (16) est mise en place entre la ventouse (14) et une lèvre périphérique (13) qui est définie à une extrémité des bras élastiques (12), la pièce femelle (2) étant alors bloquée dans l'orifice correspondant de la plaque de support (16).
